# NOUVEAU FASCICULE DE BREVET EUROPEEN

(11) **EP 3 501 724 B2**
(45) Date de publication et mention de la décision concernant l'opposition: **04.11.2026**
(45) Mention de la délivrance du brevet: 01.06.2022
(21) Numéro de dépôt: 19155807.1
(22) Date de dépôt: 17.04.2015
(51) Int. Cl.: B23K 26/26, B23K 26/32, B23K 26/30, B23K 26/322, B23K 26/60, B23K 101/00, B23K 101/18, B23K 101/34, B23K 103/04, B23K 103/08, B23K 103/00

(54) **PROCÉDÉ DE FABRICATION D'UN FLANC SOUDÉ ; FLAN SOUDÉ ET UTILISATION D'UNE PIÈCE EN ACIER FABRIQUÉ À PARTIR D'UN TEL FLAN SOUDÉ**
HERSTELLUNGSVERFAHREN VON ALUMINIUM BESCHICHTETEN STAHLBLECHEN, DIE ZUM SCHWEISSEN UND ANSCHLIESSENDEN HÄRTEN UNTER DER PRESSE BESTIMMT SIND
METHOD FOR PREPARING ALUMINIUM STEEL SHEETS INTENDED TO BE WELDED AND THEN PRESS HARDENED

(30) Priorité: 25.04.2014 WO PCT/IB2014/000612
(43) Date de publication de la demande: 26.06.2019
(60) Demande divisionnaire: 19176023.0 / 3 520 952; 22157503.8 / 4 039 403
(62) Numéro(s) de document de la (des) demande(s) initiale(s) en application de l'article 76 CBE: 15722763.8 / 3 134 225
(73) Titulaire: ArcelorMittal, 1160 Luxembourg (LU)
(72) Inventeur: SCHMIT, Francis, 60600 CLERMONT (FR); VIERSTRAETE, René, 78600 Maisons-Laffitte (FR); YIN, Qingdong, 60761 MONTATAIRE (FR); EHLING, Wolfram, 9000 GENT (BE)
(74) Mandataire: Lavoix

(56) Documents cités:
- WO-A1-2013/014512
- JP-A- 2005 169 444
- JP-A- H06 246 475
- US-A1- 2014 003 860

## Description

L'invention concerne un procédé de fabrication de flans soudés, un flan soudé et l'utilisation d'une pièce en acier fabriquée à partir d'un flan soudé. L'invention concerne encore principalement un procédé de fabrication de pièces durcies sous presse à partir de flans soudés ci-dessus, en vue de leur utilisation comme pièces de structures ou de sécurité dans des véhicules automobiles.

Il est connu de fabriquer des pièces d'acier soudées à partir de flans d'aciers de composition et/ou d'épaisseur différentes soudés entre eux bout à bout en continu. Selon un premier mode de fabrication connu, ces flans soudés sont mis en forme à froid, par exemple par emboutissage à froid. Selon un second mode de fabrication connu, ces flans soudés sont chauffés à une température permettant l'austénitisation de l'acier puis déformés à chaud et refroidis rapidement au sein de l'outillage de mise en forme. La présente invention se rapporte à ce second mode de fabrication.

La composition de l'acier est choisie pour permettre de réaliser les étapes de chauffage et de déformation à chaud, et pour conférer à la pièce soudée finale une résistance mécanique élevée, une grande résistance aux chocs ainsi qu'une bonne tenue à la corrosion. De telles pièces d'acier trouvent notamment des applications dans l'industrie automobile et plus particulièrement pour la fabrication de pièces anti-intrusion, de pièces de structure ou de pièces participant à la sécurité des véhicules automobiles grâce à leur capacité d'absorption de chocs.

Parmi les aciers présentant les caractéristiques requises pour les applications mentionnées précédemment, la tôle d'acier revêtue faisant l'objet de la publication EP971044 comporte notamment un pré-revêtement d'alliage d'aluminium ou à base d'aluminium. La tôle est revêtue, par exemple au trempé en continu, dans un bain comportant, outre de l'aluminium, du silicium et du fer avec des teneurs contrôlées. Après la mise en forme à chaud et refroidissement, on peut obtenir une microstructure majoritairement martensitique, la résistance mécanique en traction pouvant dépasser 1500 MPa.

Un procédé de fabrication connu de pièces d'acier soudées consiste à approvisionner au moins deux tôles d'acier selon la publication EP971044, à souder en bout à bout ces deux tôles pour obtenir un flan soudé, éventuellement à réaliser une découpe de ce flan soudé, puis à chauffer le flan soudé avant de réaliser une déformation à chaud, par exemple par emboutissage à chaud, de façon à conférer à la pièce d'acier la forme requise pour son application.

Une technique de soudage connue est le soudage par faisceau Laser. Cette technique présente des avantages en termes de souplesse, de qualité et de productivité comparés à d'autres techniques de soudage telles que le soudage à la molette ou le soudage à l'arc. Cependant, dans les procédés d'assemblage comportant une étape de fusion, le pré-revêtement à base d'aluminium constitué d'une couche d'alliage intermétallique en contact avec le substrat en acier, surmonté d'une couche d'alliage métallique, est dilué au cours de l'opération de soudage avec le substrat d'acier au sein de la zone fondue qui est la zone portée à l'état liquide pendant l'opération de soudage et qui se solidifie après cette opération de soudage en formant la liaison entre les deux tôles.

Deux phénomènes peuvent alors intervenir :
- selon un premier phénomène, une augmentation de la teneur en aluminium dans le métal fondu, résultant de la dilution d'une partie du pré-revêtement au sein de cette zone, conduit à la formation de composés intermétalliques. Ceux-ci peuvent être des sites d'amorçage de la rupture en cas de sollicitation mécanique.
- selon un second phénomène, l'aluminium, élément alphagène en solution solide dans la zone fondue, retarde la transformation en austénite cette zone lors de l'étape de chauffage précédant l'emboutissage à chaud. Dès lors, il n'est plus possible d'obtenir dans la zone fondue une structure complètement trempée après le refroidissement qui suit la mise en forme à chaud, et le joint soudé comporte de la ferrite. La zone fondue présente alors une dureté et une résistance mécanique en traction moindres que les deux tôles adjacentes.

Pour éviter le premier phénomène décrit ci-dessus, la publication EP2007545 décrit un procédé qui consiste à ôter à la périphérie des tôles destinées à subir l'opération de soudage, la couche d'alliage métallique superficielle en laissant la couche d'alliage intermétallique. Cet enlèvement peut être réalisé par brossage, usinage mécanique ou par l'impact d'un faisceau Laser. Dans ce dernier cas, la largeur de la zone d'enlèvement est définie grâce au déplacement longitudinal d'un faisceau Laser d'une certaine largeur, voire par oscillation d'un faisceau Laser de taille plus petite que cette largeur, prenant comme point de référence le bord de la tôle. La couche d'alliage intermétallique est maintenue pour garantir une résistance à la corrosion satisfaisante et pour éviter les phénomènes de décarburation et d'oxydation lors du traitement thermique qui précèdent l'opération de mise en forme.

Pour éviter le second phénomène mentionné ci-dessus, la publication WO2013014512 (base pour le préambule des revendications 1 et 22) décrit un procédé qui consiste, outre l'enlèvement de la couche métallique décrit ci-dessus, à éliminer l'aluminium présent sur la tranche des tôles avant soudage, dont la présence peut résulter d'une opération de découpe, et à réaliser un joint soudé avec un fil d'apport de matière de façon à augmenter la teneur en carbone de la zone fondue, dans des proportions spécifiques.

Dans les procédés des publications ci-dessus, lorsque l'enlèvement de la couche d'alliage métallique résulte d'un phénomène comportant une fusion, tel qu'un enlèvement par faisceau Laser, on constate la présence plus ou moins importante d'aluminium ayant coulé sur la tranche (celle-ci étant appelée également face secondaire) de la tôle. Un soudage ultérieur conduit à son incorporation par dilution dans la zone fondue et aboutit à des joints soudés dont la résistance mécanique et/ou la ténacité sont inférieures à celle du métal de base.

Les différents procédés d'enlèvement de l'écoulement d'aluminium sur la tranche par usinage, raclage, ablation par Laser pulsé, sont délicats à mettre en oeuvre en raison d'un positionnement difficile du flan par rapport à l'outil ou au faisceau, à l'encrassement rapide des outils lorsque l'enlèvement se fait par un moyen mécanique, ou à la projection éventuelle d'aluminium sur les faces préparées dans le cas d'une ablation par Laser sur la tranche.

Par ailleurs, après l'enlèvement de la couche métallique d'aluminium sur la périphérie des tôles, le matériau sous-jacent a un aspect plus terne et plus sombre. On sait que le soudage Laser requiert un positionnement très précis du faisceau par rapport au plan de joint formé par les tôles à assembler. Ce positionnement et guidage du faisceau, ou « suivi de joint », est usuellement réalisé grâce à des capteurs susceptibles de détecter la variation, dans une direction transverse au joint soudé, d'un faisceau de lumière réfléchie, le plan de joint apparaissant nettement plus sombre. Or la mise en place côte-à-côte avant soudage de deux tôles dont l'ablation périphérique de la couche métallique a été réalisée, ne conduit qu'à une faible variation de contraste au niveau du plan d'accostage si bien qu'il est malaisé de détecter celui-ci et que le guidage du faisceau Laser est alors réalisé avec une moins grande précision.

On recherche donc un procédé de préparation des zones périphériques de tôles pré-revêtues d'aluminium qui ne présenterait pas les inconvénients décrits ci-dessus.

On recherche un procédé de préparation économique qui permettrait d'éliminer l'opération coûteuse et délicate du nettoyage de l'aluminium ou de l'alliage d'aluminium ayant coulé sur la face secondaire à la suite d'une ablation par fusion et vaporisation.

On recherche également un procédé de préparation qui garantirait une teneur en aluminium inférieure à 0,3% dans le joint soudé réalisé à partir de tôles pré-revêtues en aluminium ou en alliage d'aluminium.

On recherche encore un procédé améliorant la précision du suivi de joint lors du soudage de tôles pré-revêtues d'aluminium ou d'alliage d'aluminium dont la couche métallique a été ôtée sur la périphérie.

La présente invention a pour but de résoudre les problèmes évoqués ci-dessus. Dans ce but, l'invention a pour objet un procédé de fabrication d'un flan soudé selon la revendication 1.

Les revendications 2 à 19 décrivent des caractéristiques particulières du procédé de fabrication selon l'invention.

L'invention a également pour objet un procédé de fabrication d'une pièce durcie sous presse selon les revendications 20 et 21.

L'invention a également pour objet un flan soudé selon la revendication 22.

La revendication 23 décrit des caractéristiques particulières du procédé de fabrication de la pièce durcie sous presse selon l'invention.

L'invention a également pour objet l'utilisation d'une pièce durcie sous presse selon la revendication 24.

La présente demande de brevet décrit également un dispositif de fabrication de flans soudés comprenant :
- un dispositif d'approvisionnement 91 d'au moins une première 11 et une seconde 12 tôles d'acier pré-revêtues d'aluminium, ou d'alliage d'aluminium, ou d'alliage à base d'aluminium,
- un dispositif d'accostage 92 des tôles, de façon à obtenir un plan médian 51 entre les tôles 11 et 12,
- un dispositif de bridage 98 des tôles,
- au moins une source permettant d'obtenir un faisceau Laser 80 pour ôter par fusion et vaporisation la couche métallique d'aluminium, ou d'alliage à d'aluminium ou à base d'aluminium, simultanément sur une zone périphérique 61, 62 des première 11 et seconde 12 tôles,
- au moins un dispositif de guidage 94 permettant de positionner le faisceau Laser 80 par rapport au plan médian 51,
- au moins une source permettant d'obtenir un faisceau Laser 95 pour le soudage des tôles 11 et 12, dans la zone d'enlèvement de la couche métallique d'aluminium 61, 62, de façon à obtenir un joint soudé,
- au moins un dispositif permettant d'obtenir un déplacement relatif des tôles 11 et 12 par rapport aux faisceaux Laser 80 et 95,
- les faisceaux Laser 80 et 95 étant disposés sur une même ligne par rapport au plan médian 51, et à une distance 64 fixe l'un de l'autre.

A titre préférentiel, la distance 64 entre les faisceaux Laser 80 et 95 est comprise entre 0,5 mm et 2m. Avantageusement, la distance 64 est inférieure à 600 mm. Selon un mode particulier, la distance 64 est inférieure à 5mm.

Selon un mode avantageux, le faisceau Laser 80 débouche à partir d'une tête d'ablation, le faisceau 95 débouche à partir d'une tête de soudage, les têtes formant un élément compact dont le dispositif de focalisation est commun pour les faisceaux Laser 80 et 95.

Avantageusement, le dispositif de guidage 94 permet également de positionner le faisceau Laser 95 par rapport au plan médian 51.

Selon un mode particulier, le dispositif comprend en outre un dispositif de fil d'apport 82 pour la réalisation dudit joint soudé.

A titre avantageux, le dispositif comporte en outre un faisceau Laser permettant d'effectuer un soudage sur la face opposée à celle où opère le faisceau 95.

D'autres caractéristiques et avantages de l'invention apparaîtront au cours de la description ci-dessous donnée à titre d'exemple et faite en référence aux figures jointes suivantes :
- la figure 1 présente une coupe micrographique d'une tôle pré-revêtue d'aluminium, destinée à être soudée, dont la périphérie a été préparée selon un procédé de l'art antérieur.
- la figure 2 présente un descriptif schématique de deux tôles placées en regard, après qu'un traitement selon l'invention d'enlèvement simultané périphérique de couche métallique, a eu lieu.

- la figure 3 illustre l'influence du jeu d'accostage entre deux tôles placées en regard, dont la couche métallique du pré-revêtement a été ôtée par ablation simultanée périphérique, sur l'écoulement du pré-revêtement le long des faces secondaires de ces tôles.
- la figure 4 illustre schématiquement un mode de réalisation préférentiel de l'invention.
- la figure 5 illustre un schéma d'un dispositif utilisé dans le procédé selon l'invention.
- la figure 6a illustre une vue en élévation d'un joint soudé Laser réalisé selon l'invention. Les micrographies 6c) et 6c) détaillent la surface de deux zones où l'ablation a eu lieu, situées symétriquement de part et d'autre du joint soudé.
- la figure 7a illustre schématiquement les étapes du procédé conventionnel de fabrication de flans soudés prérevêtus d'un revêtement métallique. Par comparaison, la figure 7b illustre le procédé de fabrication de flans soudés prérevêtus d'un revêtement métallique, selon l'invention.

On notera que les schémas ne visent pas à reproduire les dimensions relatives des différents éléments entre eux, mais à faciliter la description des différentes parties constitutives de l'invention.

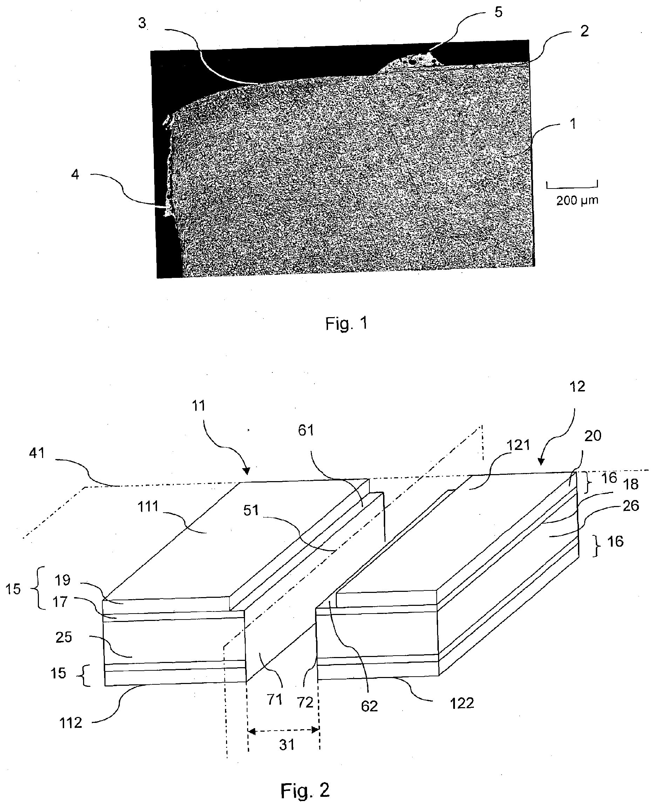

Dans les procédés de l'art antérieur où l'enlèvement de la couche d'alliage métallique résulte d'une fusion, on constate la présence plus ou moins importante d'aluminium ayant coulé sur la face secondaire. Cette situation est illustrée à la figure 1 qui présente une coupe macrographique d'une tôle d'acier de 1 mm d'épaisseur pré-revêtue d'un alliage d'aluminium, sur laquelle on a enlevé par fusion et vaporisation au moyen d'un faisceau Laser, la couche d'alliage métallique superficielle. La figure 1 présente ainsi un substrat d'acier 1 comportant un pré-revêtement d'aluminium 2 de 25 micromètres d'épaisseur. Seule une des deux faces principales de la tôle est illustrée sur la macrographie. Sur la périphérie d'une face principale de la tôle, on a ôté au moyen d'un faisceau Laser pulsé, la couche métallique d'aluminium en laissant en place la couche intermétallique, créant ainsi une zone d'ablation 3. En raison de la pression de vapeur ou de plasma généré par le faisceau Laser, l'aluminium liquide est rejeté sur la périphérie de la zone 3, créant ainsi une zone 5 d'accumulation d'aluminium. De plus, cette opération d'ablation a créé un écoulement 4 d'une partie de la couche d'aluminium sur la face secondaire, écoulement dont la longueur peut atteindre 0,4 mm environ. En effet, contrairement à ce qui intervient dans le cas de l'impact d'un faisceau Laser sur un revêtement organique qui est totalement vaporisé, l'impact du faisceau Laser sur un revêtement métallique ne conduit pas à sa disparition totale par vaporisation, mais à une vaporisation partielle et une fusion.

Les inventeurs ont mis en évidence que ce phénomène d'écoulement le long de la face secondaire pouvait être évité par le procédé suivant : selon la figure 2, on approvisionne au moins deux tôles 11 et 12 d'acier pré-revêtues, qui peuvent être de même épaisseur ou d'épaisseurs différentes, la figure 2 illustrant la première alternative. A ce stade, les tôles 11 et 12 ne sont pas nécessairement rectangulaires, la géométrie de leur contour est en rapport avec celui des pièces finales que l'on souhaite fabriquer, qui sera obtenue par une mise en forme ultérieure. Le terme de tôle est entendu ici dans un sens large comme tout objet obtenu par découpe à partir d'une bande, d'une bobine ou d'une feuille.

Ces tôles sont constituées d'un substrat en acier 25 et 26, qui peut être notamment sous forme de tôle laminée à chaud ou laminée à froid en fonction de l'épaisseur désirée. La composition de ces substrats peut être identique ou différente, selon la répartition souhaitée des caractéristiques mécaniques sur la pièce finale. Ces aciers sont des aciers de traitement thermique, aptes à subir une trempe martensitique ou bainitique après un traitement d'austénitisation. L'épaisseur des tôles est comprise préférentiellement entre 0,5 et 4 mm environ, gamme d'épaisseur utilisée notamment dans la fabrication de pièces structurales ou de renfort pour l'industrie automobile.

Les tôles 11 et 12 comprennent respectivement des faces principales 111, 112, et 121, 122. A la surface de chacune de ces faces, on trouve un pré-revêtement 15 et 16, dont l'épaisseur et la composition peuvent être identiques ou différentes dans les tôles 1 et 2. Ces pré-revêtements 15 et 16 sont tous deux obtenus au trempé dans un bain d'aluminiage.

Le pré-revêtement 15, est lui-même composé :
- d'une couche d'alliage intermétallique 17 situé au contact du substrat 25. Il s'agit d'une couche d'alliage du type FeₓAl_{y} formée par réaction entre le substrat 25 et le métal fondu du bain d'aluminiage, lors du passage des tôles en continu dans le bain d'aluminiage. Cette couche a une épaisseur typique de 3 à 10 micromètres. Le bain d'aluminiage est un bain d'aluminium, ou un alliage d'aluminium, l'aluminium étant alors en teneur pondérale supérieure à 50%, ou un alliage à base d'aluminium. Dans ce dernier cas, l'aluminium est le constituant majoritaire de l'alliage.
- d'une couche d'alliage métallique 19, dont la composition est pratiquement celle du bain d'aluminium, ou d'alliage d'aluminium ou d'alliage à base d'aluminium.

De même, dans la tôle 12, le pré-revêtement 16 est constitué d'une couche d'alliage intermétallique au contact du substrat 26 et d'une couche métallique superficielle.

Préférentiellement, l'alliage métallique 19, 20 du pré-revêtement peut contenir de 8 à 11% en poids de silicium, de 2 à 4% de fer, le reste de la composition étant de l'aluminium et des impuretés inévitables. L'addition de silicium permet notamment de réduire l'épaisseur de la couche intermétallique 17.

Les deux tôles 11 et 12 peuvent être disposées de façon à ce que leurs faces principales 111 et 112 soient comprises au sein d'un même plan 41. De la sorte, un faisceau Laser mis simultanément en oeuvre sur ces deux tôles viendra interagir de façon identique. Mais on peut également prévoir que les deux tôles 11 et 12 ne se situent pas exactement sur le même plan, c'est à dire que le point de focalisation d'un faisceau Laser n'est pas situé exactement au même niveau par rapport à la surface de deux tôles avec un pré-revêtement identique. Cette situation peut se rencontrer par exemple dans le cas de différence d'épaisseur entre les deux tôles 11 et 12. Même dans ce cas, les inventeurs ont vérifié que les résultats recherchés, en particulier l'absence d'écoulement de pré-revêtement le long des faces secondaires, sont obtenus lorsque le procédé est mis à l'œuvre selon l'invention.

On accoste les deux tôles 11 et 12 de façon à mettre en regard deux de leurs faces secondaires 71 et 72. Cet accostage définit ainsi un plan médian 51 entre les tôles 11 et 12, perpendiculaire à leurs faces principales, et un jeu 31 entre ces tôles.

Selon l'invention, on enlève ensuite simultanément, par un procédé comportant une fusion et une vaporisation, dans une portion périphérique 61 de la tôle 11, et une portion périphérique 62 de la tôle 12, les couches respectives d'alliage métallique 19 et 29 de ces tôles. En règle générale, la plus grande partie de cet enlèvement est dû à un phénomène de fusion, on exclut ici des procédés où l'enlèvement des couches 19 et 20 interviendrait par vaporisation pure. Cet enlèvement, appelé aussi ablation, est réalisé préférentiellement par faisceau Laser pulsé. L'impact du faisceau à haute densité d'énergie et de puissance sur le pré-revêtement provoque une liquéfaction et une vaporisation de la surface de ce dernier. En raison de la pression de plasma, le pré-revêtement liquéfié est expulsé vers la périphérie de la zone où intervient l'ablation. Une succession d'impulsions Laser brèves avec des paramètres adaptés conduit à une ablation de la couche métallique 19 et 20, laissant en place la couche d'alliage intermétallique 17 et 18. Cependant, selon le degré de résistance à la corrosion souhaité sur la pièce finale, il est également possible d'ôter une portion plus ou moins importante de la couche intermétallique 17 et 18, par exemple plus de 50% de cette couche. L'interaction d'un faisceau Laser pulsé dirigé vers la périphérie 61 et 62 de tôles pré-revêtues, en translation relative par rapport à ces tôles, conduit donc à un enlèvement de la couche métallique 19 et 20.

L'ablation est réalisée d'une manière simultanée sur les tôles 11 et 12, c'est-à-dire que le moyen de fusion et de vaporisation est appliqué simultanément sur les zones périphériques 61 et 62 en regard l'une de l'autre. En particulier, lorsque l'ablation est réalisée par un faisceau Laser, celui-ci vient impacter les zones 61 et 62 en chevauchant le plan médian 51. Selon un mode de réalisation préféré, on utilise un faisceau Laser pulsé de forme rectangulaire. On peut également mettre en oeuvre un faisceau Laser de plus petite dimension que l'on fait osciller pour couvrir la largeur à traiter. On peut également mettre en oeuvre le procédé en utilisant un faisceau principal divisé en deux sous faisceaux rectangulaires chevauchant chacun le plan médian 51. Ces deux sous-faisceaux peuvent être disposés symétriquement par rapport au plan 51, ou être décalés longitudinalement l'un par rapport à l'autre dans le sens du soudage. Ces deux sous-faisceaux peuvent être de taille identique ou différente.

Dans ces différents modes d'ablation simultanée, il était alors attendu que l'aluminium résultant de la fusion due à l'impact du faisceau, vînt couler sur les faces secondaires 71 et 72 en raison de la gravité et de la pression de plasma générée par le faisceau.

D'une manière surprenante, les inventeurs ont mis en évidence que les faces secondaires 71 et 72 ne comportent pas d'écoulement d'aluminium lorsque le jeu 31 est compris entre 0,02 et 2 mm. Sans vouloir être lié par une théorie, on pense que les faces secondaires 71 et 72 sont couvertes d'une très mince couche d'oxyde de fer et/ou d'aluminium provenant de la découpe des tôles 11 et 12. Compte tenu de la tension interfaciale entre cette fine couche d'oxydes et l'aluminium liquide d'une part, et du jeu spécifique 31 d'autre part, la surface libre de l'aluminium liquide entre les tôles 11 et 12 s'incurve pour former un angle de mouillage, sans que le liquide ne coule dans l'intervalle 31. Un jeu minimal de 0,02 mm permet au faisceau de passer entre les tôles 11 et 12, ôtant d'éventuelles traces d'aluminium qui auraient pu se trouver sur la face secondaire. De plus, comme on le verra plus loin, selon une variante du procédé, on vient souder immédiatement après avoir réalisé cette opération d'ablation : lorsque la distance 31 est inférieure à 0,02 mm, il existe une possibilité que les deux parties en regard des tôles 11 et 12, en raison de leur dilatation thermique due aux opérations d'ablation et de soudage, ne viennent en contact l'une de l'autre, conduisant à une déformation plastique néfaste.

Le jeu 31 est avantageusement supérieur à 0,04 mm, ce qui permet de mettre en oeuvre des procédés de découpe mécanique dont la tolérance n'a pas à être contrôlée de façon extrêmement stricte, et permet de réduire les coûts de production.

De plus, comme on l'a indiqué ci-dessus, le guidage du faisceau Laser de soudage est plus difficile dans le cas de tôles dont le revêtement a été ôté à la périphérie, en raison de leur aspect plus sombre. Les inventeurs ont mis en évidence qu'une largeur de jeu 31 supérieure à 0,06 mm permettait de renforcer notablement le contraste optique du plan de joint qui apparaissait de façon différenciée par rapport aux zones d'ablation périphériques, et ainsi de s'assurer que le soudage était bien positionné sur le plan médian 51.

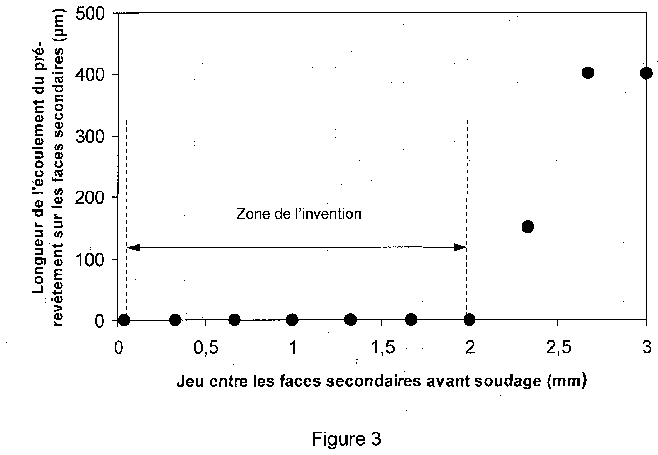

Par ailleurs, les inventeurs ont constaté que lorsque le jeu 31 était supérieur à 2 mm, le mécanisme exposé ci-dessus n'était plus opérant pour empêcher l'écoulement de l'aluminium liquide, comme le démontre les résultats expérimentaux de la figure 3.

Avantageusement, un jeu compris entre 0,02 et 0,2mm pourra être retenu.

Pour le procédé d'ablation, on pourra utiliser avantageusement un Laser de type Q-switch d'une puissance nominale de quelques centaines de watts, délivrant des impulsions d'une durée de l'ordre d'une cinquantaine de nanosecondes avec une puissance maximale de 1-20 mégawatts. Ce type de Laser permet par exemple d'obtenir une zone d'impact du faisceau rectangulaire de 2mm (dans le sens d'une direction perpendiculaire au plan médian 51) et de 1mm, ou moins de 1mm, (par exemple 0,5mm) dans le sens de la longueur de ce plan médian. Le déplacement du faisceau permet alors de créer des zones d'ablation 61 et 62 de part et d'autre du plan 51, sans qu'un écoulement n'intervienne le long des faces 71 et 72.

La morphologie des zones d'ablation 61 et 62 sera naturellement adaptée aux conditions de soudage qui suivront, en particulier à la largeur de la zone soudée : on peut ainsi prévoir, selon la nature et la puissance du procédé de soudage qui suivra, que la largeur de chacune des zones d'ablation 61 et 62 soit comprise entre 0,25 et 2,5mm, ou par exemple dans le cas de soudage hybride Laser-arc ou plasma, entre 0,25 et 3mm. On choisira des conditions d'ablation de telle sorte que la somme des largeurs des zones d'ablation 61 et 62 soit supérieure à la largeur de la zone soudée.

On peut prévoir, dans le cas où les tôles 11 et 12 sont identiques, que les largeurs des zones d'ablation 61 et 62 soient également identiques. Mais on peut aussi prévoir, grâce par exemple au décentrement dans le sens latéral, d'un faisceau Laser par rapport au plan médian 51, que les largeurs de ces zones d'ablation soient différentes.

Selon l'invention, l'ablation peut être réalisée sur un seul côté des faces principales. La figure 2 illustre ainsi ce cas où l'ablation périphérique simultanée a été effectuée uniquement du côté des faces principales 111 et 121.

Cependant, dans le but de limiter le plus possible l'introduction d'aluminium lors du soudage qui sera effectué sur ces tôles, on peut également réaliser de manière préférentielle cette ablation périphérique simultanée sur l'ensemble des faces, c'est-à-dire 111, 121, 112, 122. A cet effet, dans le cas d'une ablation par soudage Laser, on utilisera avantageusement un dispositif du type «power switch», qui divise la puissance du faisceau, une partie étant utilisée pour l'ablation simultanée des faces 111 et 121, l'autre partie étant utilisée pour l'ablation simultanée des faces 112 et 122. Il est également possible d'utiliser un second Laser, distinct du premier.

Après cette opération d'ablation simultanée, on dispose de deux tôles dont la périphérie a été dépourvue de leur couche d'alliage métallique, aptes au soudage.

Ce soudage peut intervenir ultérieurement, les tôles pouvant être soit conservées en regard l'une de l'autre, soit séparées. Cette séparation intervient aisément, le procédé selon l'invention ayant permis de limiter l'écoulement de l'aluminium liquide entre les tôles, si bien qu'un écoulement solidifié ne créée pas de liaison mécanique indésirable.

Mais les inventeurs ont également découvert qu'une opération de soudage en ligne pouvait être réalisée avec profit sur les tôles ainsi préparées. En effet, compte tenu de l'absence d'écoulement d'aluminium sur la face secondaire, les tôles préparées peuvent être soudées immédiatement sans qu'il soit nécessaire d'ôter les tôles de la ligne puis de les repositionner après nettoyage. L'intervalle de temps s'écoulant entre l'opération d'ablation simultanée et l'opération de soudage est inférieur à une minute, de façon à minimiser une oxydation sur les faces 71 et 72 et à obtenir une productivité plus importante. En outre, lorsque cet intervalle de temps est faible, le soudage intervient sur des tôles préchauffées par l'opération d'ablation, si bien que la quantité d'énergie à mettre en oeuvre pour le soudage est moins importante.

On pourra utiliser tout procédé de soudage continu approprié aux épaisseurs et aux conditions de productivité et de qualité requises pour les joints soudés, et notamment :
- le soudage par faisceau Laser
- le soudage à l'arc électrique, en particulier par les procédés TIG (« Tungsten Inert Gas), plasma, MIG (« Métal Inert Gas) ou MAG (« Metal Active Gas »)
- le soudage par faisceau d'électrons.

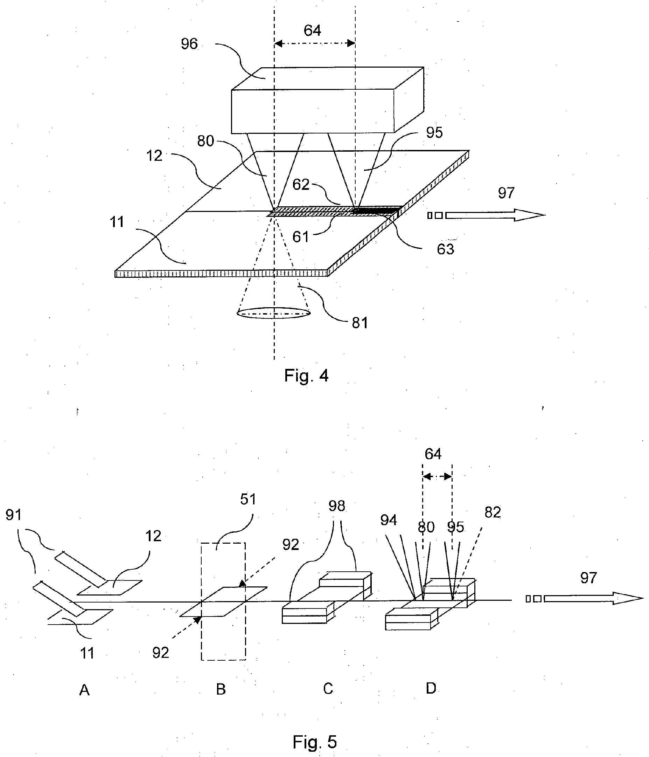

Un procédé utilisé préférentiellement est le soudage Laser en raison de la forte densité d'énergie inhérente à ce procédé, qui permet d'obtenir une largeur de zone fondue étroite variant dans de faibles proportions. Ce procédé peut être utilisé seul ou en combinaison avec un fil d'apport 82, comme le montre la figure 5. Dans ce cas, il est possible de modifier la composition de la zone fondue grâce à une composition du fil d'apport différente de celles des compositions des tôles 25 et 26. Le procédé de soudage associant un faisceau Laser et un fil d'apport peut consister alors soit en un procédé où le fil d'apport est fondu uniquement par le faisceau Laser, soit en un soudage hybride laser-TIG, c'est-à-dire un faisceau Laser combiné à un arc électrique délivré par une torche de soudage TIG équipée d'une électrode non fusible, soit en un soudage hybride Laser-MIG dans lequel la torche de soudage est équipée d'une électrode filaire fusible.

Selon une variante de l'invention, les dispositifs réalisant les opérations d'ablation simultanée et de soudage, sont combinés au sein d'un seul équipement. Ce dernier est animé d'une vitesse unique de déplacement relatif par rapport aux tôles. Dans cet équipement, la vitesse d'ablation simultanée est identique à la vitesse de soudage, ce qui permet d'effectuer une fabrication dans des conditions optimales de productivité et de rationalisation.

La figure 4 illustre une variante préférentielle de l'invention : on a représenté les tôles 11 et 12 comprenant un pré-revêtement d'aluminium, d'alliage d'aluminium ou à base d'aluminium. Un premier faisceau Laser 80 effectue une ablation simultanée d'une zone périphérique 61 de la tôle 11, et d'une zone périphérique 62 de la tôle 12, le faisceau Laser chevauchant le plan médian des tôles 11 et 12. Un second faisceau Laser 81 effectue simultanément une opération identique sur la face inférieure de la tôle. Selon une variante (non représentée à la figure 4) seul un faisceau Laser 80 effectue l'ablation, celle-ci n'étant pas réalisée sur la face opposée. Cette variante sera mise en oeuvre lorsqu'il n'est pas nécessaire de rechercher une très basse teneur en aluminium dans la zone soudée qui sera réalisée ultérieurement.

A une certaine distance 64 de cette première zone d'ablation, un faisceau Laser 95 effectue le soudage des tôles 11 et 12, de façon à créer une zone soudée 63. La distance entre les dispositifs d'ablation et de soudage est maintenue constante selon un dispositif connu en lui-même représenté schématiquement par 96. Les tôles 11 et 12 se déplacent par rapport à cet ensemble 96 selon le mouvement indiqué par 97.

Les tôles 11 et 12 sont avantageusement bridées par un dispositif de bridage, non représenté sur la figure 4. Les tôles sont bridées pendant l'opération d'ablation des faisceaux 80 et 81, ce bridage est maintenu jusqu'au soudage inclus, celui-ci étant réalisé grâce au faisceau 95. De la sorte, aucun déplacement relatif entre les tôles 11 et 12 ne se produit, et le soudage grâce au faisceau Laser 95 peut intervenir avec une plus grande précision.

La distance maximale entre les points d'impact des faisceaux 80, 81 d'une part, et 95 d'autre part, dépend en particulier de la vitesse de soudage : comme on l'a vu ci-dessus, elle sera déterminée en particulier de façon à ce que la durée s'écoulant entre les impacts des faisceaux (80, 81) et 95, soit inférieur à une minute. Cette distance maximale pourra être préférentiellement inférieure à 2 m pour que l'équipement soit particulièrement compact.

La distance minimale 64 entre ces points d'impact peut être réduite jusqu'à 0,5 mm. Une distance plus faible que 0,5mm conduirait à une interaction indésirable entre les faisceaux d'ablation 80, 81 d'une part, et le « keyhole » présent de façon inhérente lors du soudage par le faisceau 95 d'autre part.

Une faible distance 64 peut aussi être obtenue en combinant les deux têtes d'ablation et de soudage (les têtes étant définies comme les dispositifs à partir desquels débouchent les faisceaux Laser) au sein d'une seule tête plus compacte, cette dernière pouvant utiliser par exemple le même élément de focalisation pour l'opération d'ablation et de soudage.

Une très faible distance 64 permet de mettre en oeuvre le procédé grâce à un équipement particulièrement compact et de faire en sorte qu'une certaine quantité de l'énergie thermique délivrée par les faisceaux Laser 80 et 81 vienne s'ajouter à l'énergie linéaire de soudage délivrée par le faisceau 95, accroissant ainsi le rendement énergétique global du procédé. Une très faible distance permet de raccourcir le temps de cycle nécessaire à la production unitaire d'un flan soudé, et ainsi d'augmenter la productivité. Ces effets sont obtenus en particulier lorsque la distance 64 est inférieure à 600mm, ou même inférieure à 5mm.

La figure 5 illustre un schéma d'un dispositif utilisé dans le procédé selon l'invention. Celui-ci comprend les éléments suivants :
- un poste A comprend un dispositif d'approvisionnement 91 connu en lui-même, permettant d'approvisionner au moins une première 11 et une seconde 12 tôles d'acier pré-revêtues d'aluminium, ou d'alliage d'aluminium, ou d'alliage à base d'aluminium.
- un poste B comprend un dispositif d'accostage 92 de ces tôles 11 et 12, également connu en lui-même. Après l'accostage des tôles, un plan médian 51 virtuel est ainsi défini.
- un poste C comprend un dispositif de bridage 98 de ces tôles 11 et 12 connu en lui-même, qui peut être par exemple un dispositif de bridage magnétique, mécanique ou hydraulique.
- un poste D comprend au moins un dispositif de guidage 94 connu en lui-même qui permet de détecter le plan médian 51 et de positionner le faisceau Laser 80 par rapport à ce plan médian. Ce dispositif peut par exemple comporter un éclairage de la zone du plan médian par un faisceau lumineux, et un capteur photosensible CCD ou CMOS du faisceau réfléchi, qui permet de localiser la position (x, y) du plan médian à un instant donné. Ceci permet de commander le positionnement du faisceau Laser 80 d'ablation qui se trouve en aval dans le sens de la direction relative de soudage, de telle sorte que sa position coïncide avec la localisation souhaitée de la zone d'ablation.
- au moins une source permettant d'obtenir un faisceau Laser 80 pour ôter par fusion et vaporisation la couche métallique d'aluminium, simultanément sur la zone périphérique de part et d'autre du plan médian 51. Comme on l'a mentionné précédemment, un second faisceau Laser 81 (non représenté sur la figure 5) peut également effectuer la même opération sur les faces opposées.
- au moins une source permettant d'obtenir un faisceau Laser 95 pour le soudage des tôles 11 et 12, dans la zone d'enlèvement de la couche métallique d'aluminium 61, 62, de façon à obtenir un joint soudé. La source Laser utilisée peut être choisie parmi une source Laser de type Laser gaz CO₂ de longueur d'onde de 10 micromètres ou une source Laser état solide de longueur d'onde de 1 micromètre. Compte tenu de l'épaisseur des tôles, typiquement inférieure à 3 millimètres, la puissance du Laser gaz CO₂ sera supérieure ou égale à 3, voire à 7 kilowatts ; dans le cas d'un Laser état solide, la puissance sera supérieure ou égale à 2, voire à 4 kilowatts.

Un second faisceau Laser, d'un type semblable à 95, peut être appliqué en partie inférieure, c'est-à-dire sur la face opposée. Cette disposition permet d'augmenter la vitesse de soudage et/ou de diminuer la puissance unitaire de la source 95.

Ce faisceau 95 peut être soit guidé par un dispositif de guidage propre, distinct de 94 (cas non représenté sur la figure 5) soit être guidé par le dispositif 94. Cette dernière solution est particulièrement avantageuse puisqu'elle permet de faire en sorte que le soudage soit exactement localisé dans la zone où est intervenue l'ablation, c'est-à-dire que les deux étapes d'ablation et de soudage soient parfaitement coordonnées.

L'ensemble peut comporter un dispositif de fil d'apport 82, de façon à modifier la composition de la zone fondue grâce à une composition du fil d'apport différente de celles des compositions des tôles 25 et 26.

Les tôles 11 et 12 sont déplacées depuis le poste A vers le poste D, de façon à obtenir un déplacement relatif des tôles par rapport aux faisceaux Laser 80 et 95, ceux-ci étant disposés sur une même ligne par rapport au plan médian 51, et à une distance 64 fixe l'un de l'autre.

Comme on l'a vu précédemment, cette distance 64 est comprise de préférence entre 0,5mm et 2 m, préférentiellement entre 0,5mm et 600mm, ou entre 0,5mm et 5mm.

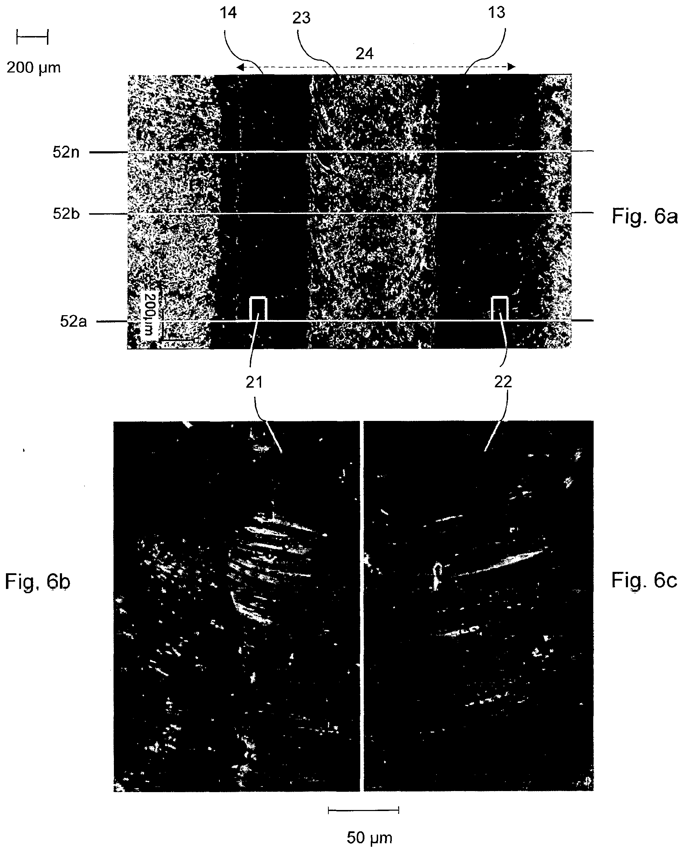

Le flan soudé obtenu par le procédé selon l'invention présente des caractéristiques spécifiques :
- selon la figure 5, le soudage des flans intervenant en ligne selon le plan médian 51, est réalisé sur des flans 11 et 12 qui ont subi une ablation simultanée grâce au faisceau 95. L'ablation conduit à une fusion et une vaporisation du revêtement, sa solidification ultérieure se produit en formant des rides spécifiques dont l'espacement dépend de la durée d'impulsion et de la vitesse d'avance du faisceau d'ablation. Dans le procédé illustré à la figure 5, cette morphologie de solidification est identique de part et d'autre du plan 51, puisque l'ablation est réalisée grâce à un faisceau chevauchant ce plan de joint. Ainsi, la figure 6 présente une vue macrographique en élévation d'un joint soudé réalisé selon le procédé de la figure 5. Les zones 13 et 14, ayant subi une ablation simultanée, sont situées de part et d'autre de la soudure 23. Si l'on considère des zones 21 et 22 situées en regard l'une de l'autre le long d'une section transversale 52a, on constate que la morphologie de solidification est identique. Il en est de même pour les autres sections, 52b... 52n. Ainsi, lorsque le faisceau Laser 95 de soudage impacte les deux tôles à assembler, cet impact intervient sur des zones dont la réflectivité est identique de part et d'autre du plan 51, si bien que l'on obtient une profondeur de pénétration absolument identique de part et d'autre de ce plan. L'invention permet donc d'obtenir une géométrie du joint soudé final très régulière et une dilution bien homogène de l'aluminium dans la soudure, quelle soit la section transversale 52a, 52b... 52n considérée.
- d'autre part, dans la technique de l'art antérieur, on a vu que l'ablation était réalisée sur une seule tôle à la fois, en utilisant un faisceau Laser en déplacement longitudinal qui prend comme point de référence le bord de la tôle. Cependant, malgré les précautions apportées à l'opération de découpe des tôles, la rectitude d'un bord préparé comporte inévitablement un écart par rapport à une ligne droite idéale, l'écart pouvant être quantifié par un écart-type σ₁. Par ailleurs, le déplacement longitudinal du faisceau Laser est lui-même sujet à une variation de sa position dans le sens transversal, quantifiée par un écart-type σ₂. Par cette méthode, on produit donc une tôle dont la largeur de la zone avec ablation comporte une variation d'écart type (σ₁+ σ₂) dans le sens longitudinal de l'opération d'ablation. Après cette opération, ces deux tôles sont mises en regard puis soudées. On réalise ainsi un flan soudé dont la largeur totale de la zone avec ablation comporte une certaine variabilité qui est la somme de celles associées à chacune des deux tôles, soit 2(σ₁+ σ₂)
- Par comparaison, dans le procédé selon l'invention, l'ablation est réalisée en prenant un plan de référence unique, le plan médian 51, et l'opération d'ablation est réalisée en une étape unique, si bien que la variabilité de la largeur totale de la zone avec ablation dans le sens longitudinal est égale à (σ₁+ σ₂), soit une réduction de moitié par rapport à la technique de l'art antérieur. Des mesures de largeur de la zone totale d'ablation réalisées à différentes positions le long d'un joint soudé mettent en évidence que celle-ci varie de moins de 10%.

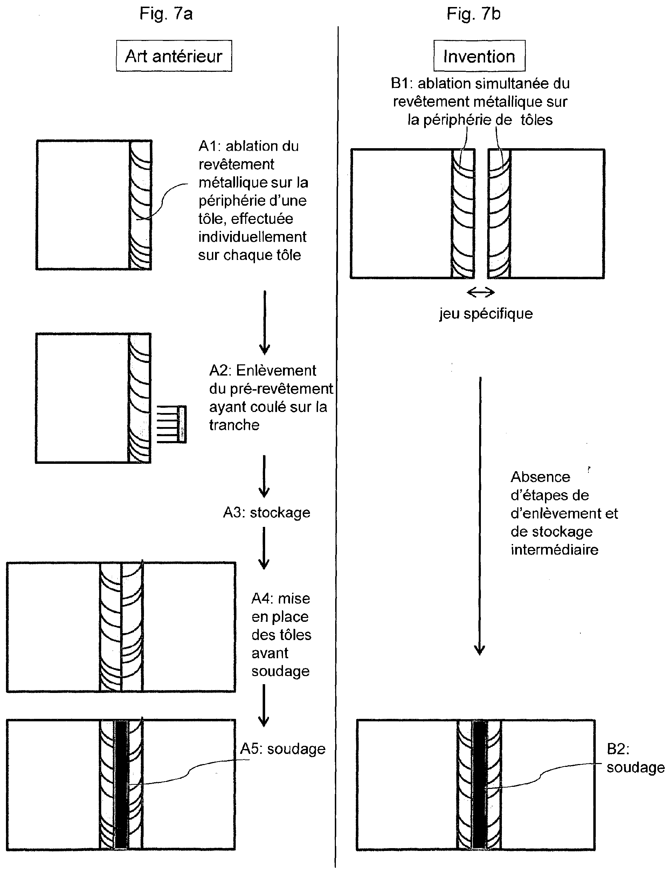

En synthèse, on présente schématiquement aux figures 7a et b la comparaison des étapes du procédé conventionnel de fabrication de flans soudés prérevêtus d'un revêtement métallique avec celui selon l'invention:
Dans le cas du procédé conventionnel (figure 7a), l'ablation du pré-revêtement métallique est effectué sur la périphérie de chaque tôle, cette opération étant effectuée individuellement sur chaque tôle (étape A1) On élimine ensuite (étape A2) le pré-revêtement ayant coulé sur la tranche, résultant de l'étape A1. Après un stockage intermédiaire des tôles (étape A3), celles-ci sont mises en place en vue de leur assemblage par soudage (étape A4) Après cette mise en place, il n'existe pas de symétrie entre les structures de solidification dans les zones d'ablation périphériques, ces structures se trouvant positionnés de façon aléatoire par rapport au plan médian d'accostage des tôles. Ces tôles sont ensuite soudées (étape A5)

Dans le cas du procédé selon l'invention (figure 7b), on ôte de manière simultanée le pré-revêtement métallique sur la périphérie de tôles placées en regard, un jeu spécifique étant maintenu entre les tôles (étape B1) Cette opération produit une situation où les structures de solidification sont identiques, symétriquement de part et d'autre du plan médian d'accostage. Puis, sans étape intermédiaire, on assemble immédiatement les tôles ainsi préparées (étape B2)

On voit donc que les joints soudés réalisés selon le procédé conventionnel, et selon l'invention, diffèrent par les caractéristiques morphologiques dans les zones de solidification à proximité immédiate du métal fondu de soudage.

A titre d'exemple non limitatif, les modes de réalisation suivants vont illustrer des avantages conférés par l'invention.

### Exemple :

On a approvisionné des tôles de 1,2 mm d'épaisseur d'acier ayant pour composition en poids : 0,23% de C, 1,19% de Mn, 0,014% de P, 0,001% de S, 0,27% de Si, 0,028% d'Al, 0,034% de Ti, 0,003% de B, 0,18% de Cr, le reste étant du fer et des impuretés résultant de l'élaboration. Ces flans comportent un pré-revêtement de 30 micromètres d'épaisseur sur chaque face. Ce pré-revêtement est constitué d'une couche intermétallique de 5 micromètres d'épaisseur en contact avec le substrat d'acier, contenant en poids 50% en aluminium, 40% en fer et 10% en silicium. Cette couche d'alliage intermétallique résulte de la réaction entre le substrat en acier et le bain d'alliage d'aluminium.

La couche intermétallique est surmontée par une couche métallique de 25 micromètres d'épaisseur, contenant en poids 9% de silicium, 3% de fer, le solde étant de l'aluminium et des impuretés inévitables.

Ces tôles ont une dimension de 400 mm x 800 mm. Le soudage est destiné à être effectué sur les bords longs de 400mm.

On a placé deux de ces tôles de façon à ce que le jeu entre leurs bords en regard soit de 0,1 mm. On a ensuite réalisé une ablation de la couche métallique à la périphérie de ces tôles, grâce à un Laser pulsé de puissance moyenne 800W. Cette ablation est réalisée simultanément par deux faisceaux sur chacune des faces opposées de la tôle. Les tôles sont animées d'un mouvement de déplacement par rapport au faisceau à une vitesse constante V = 6 m/mn. Chacun des faisceaux est focalisé de façon à obtenir une tâche focale rectangulaire de 2mm x 0,5mm, la distance de 2 mm s'étendant dans le sens transversal par rapport au plan médian des deux tôles. On créée de la sorte simultanément deux tôles dont la périphérie se trouve dépourvue de la couche métallique sur une largeur pratiquement de 1 mm sur chacune des tôles. Le guidage de cette opération d'ablation est réalisé grâce à un capteur détectant la position du plan médian entre les deux tôles, placé immédiatement en amont par rapport aux deux faisceaux Laser pulsés d'ablation, à une position notée xo. Ce capteur est situé à une distance di d'environ 100 mm des faisceaux d'ablation. Au niveau du capteur, les coordonnées (xo, yo) de la position du plan médian sont enregistrées à un instant to par un moyen informatique. Les tôles se déplaçant à une vitesse v, cette position de plan arrive à la hauteur des faisceaux pulsés d'ablation à un instant ${t}_{1} = {t}_{0} + \frac{d 1}{V}$. Grâce à un dispositif de déviation des faisceaux Laser, on adapte la position précise de l'impact des faisceaux Laser sur les tôles qui intervient au moment t₁, de façon à ce que celui-ci corresponde exactement à la zone d'ablation définie à partir de la position du plan médian.

Après ablation, un faisceau Laser situé à une distance fixe d₂ de 200mm des faisceaux Laser pulsés, permet de réaliser un joint soudé entre ces tôles. Le soudage est réalisé avec une puissance linéaire de 0,6 kJ/cm, sous protection d'hélium, de façon à éviter des phénomènes de décarburation, d'oxydation et d'absorption d'hydrogène. La durée s'écoulant entre l'opération d'ablation et le soudage est de 2 s.

Le guidage du faisceau Laser de soudage est réalisé là encore grâce au capteur situé en amont de l'opération d'ablation. La position de plan médian enregistrée à l'instant to arrive à la hauteur du faisceau Laser de soudage, à l'instant ${t}_{2} = {t}_{0} + \frac{\left(d1+d2\right)}{V}$. Grâce à un dispositif de guidage optique du faisceau Laser, on adapte alors la position précise de l'impact du faisceau Laser de soudage de façon à ce que celui-ci soit centré sur la position du plan médian qui a été définie précédemment.

La figure 6a est une macrographie illustrant une vue en élévation du joint soudé Laser obtenu, où la soudure 23 est environnée de deux zones 13 et 14 où l'ablation a été réalisée simultanément. La largeur d'ablation totale 24 est de 1,92 mm en moyenne, et varie de moins de 10% le long du flan soudé.

Les figures 6b et 6c illustrent à un grandissement plus important, la surface de zones 21 et 22 disposées symétriquement de part et d'autre de la section 52a transversale au joint soudé. On constate que les rides de solidification de ces zones 21 et 22 sont bien identiques de part et d'autre du joint soudé et présentent un caractère de continuité.

Par ailleurs, on a analysé par microsonde de Castaing la teneur en aluminium de la zone soudée ainsi réalisée : celle-ci reste inférieure à 0,3%, ce qui indique bien que la quantité d'aluminium sur les faces secondaires, après l'étape d'ablation et avant le soudage, est pratiquement nulle.

Un flan soudé réalisé dans les conditions de l'invention a été ensuite chauffé dans un four jusqu'à une température de 900°C et maintenu à cette température, la durée totale de séjour dans le four étant de 6 minutes. Le flan chauffé est ensuite embouti à chaud pour former une pièce, celle-ci étant maintenue dans l'outillage de presse d'emboutissage de façon à refroidir la pièce à une vitesse supérieure à la vitesse critique de trempe martensitique de l'acier.

On constate alors que la zone soudée sur la pièce emboutie à chaud ne comporte pas de composés intermétalliques Fe-Al fragiles, et que la dureté de la zone fondue est pratiquement identique à celle du métal de base.

Ainsi l'invention permet de réaliser de façon économique des pièces de structures et de sécurité pour le domaine automobile, comportant un joint soudé, à partir de tôles aluminiées.

## Revendications

1. Procédé de fabrication d'un flan soudé, dans lequel :
on approvisionne au moins une première (11) et une seconde (12) tôles préparées par un procédé de préparation comprenant les étapes successives selon lesquelles :
- on approvisionne au moins une première (11) et une seconde (12) tôles d'acier pré-revêtues, constituées d'un substrat en acier (25,26), ledit acier étant un acier de traitement thermique, apte à subir une trempe martensitique ou bainitique après un traitement d'austénitisation, et d'un pré-revêtement (15,16) constitué d'une couche d'alliage intermétallique (17,18) en contact avec ledit substrat en acier, surmontée d'une couche métallique d'aluminium ou d'alliage d'aluminium ou à base d'aluminium (19,20), ladite au moins une première tôle (11) comprenant une face principale (111), une face principale opposée (112), et au moins une face secondaire (71), ladite au moins une seconde tôle (12) comprenant une face principale (121), une face principale opposée (122), et au moins une face secondaire (72),
**caractérisé en ce que** le procédé comprend les étapes suivantes :
- on accoste lesdites au moins une première (11) et seconde (12) tôles, en laissant un jeu (31) compris entre 0,02 et 2 mm entre lesdites au moins une face secondaires (71) et (72) placées en regard, l'accostage desdites au moins une première (11) et seconde tôles (12) définissant un plan médian (51) perpendiculaire aux faces principales desdites au moins une première (11) et seconde tôle (12), puis
- on enlève par fusion et vaporisation, simultanément sur au moins ladite face principale (111) et ladite face principale (121), ladite couche d'alliage métallique (19) dans une zone périphérique (61) de ladite au moins une tôle (11), et ladite couche d'alliage métallique (20) dans une zone périphérique (62) de ladite au moins une tôle (12), lesdites zones périphériques (61) et (62) étant les zones des faces principales (111) et (121) les plus proches par rapport audit plan médian (51) situées de part et d'autre par rapport à celui-ci, et dans lequel une opération de soudage desdites au moins une première tôle (11) et au moins une seconde tôle (12) intervient dans la zone dudit enlèvement par fusion et vaporisation, suivant un plan défini par ledit plan médian (51), moins d'une minute après ladite opération d'enlèvement par fusion et vaporisation sur lesdites au moins une première tôle (11) et au moins une seconde tôle (12).

2. Procédé de fabrication selon la revendication 1, dans lequel ledit enlèvement simultané par fusion et vaporisation est réalisé par un faisceau Laser chevauchant ledit plan médian (51).

3. Procédé de fabrication selon l'une quelconque des revendications 1 ou 2, dans lequel la largeur de ladite zone périphérique (61) et la largeur de ladite zone périphérique (62) sont comprises entre 0,25 et 2,5 mm.

4. Procédé de fabrication selon l'une quelconque des revendications 1 à 3, dans lequel la largeur de ladite zone périphérique (61) et la largeur de ladite zone périphérique (62) sont égales.

5. Procédé de fabrication selon l'une quelconque des revendications 1 à 3, dans lequel la largeur de ladite zone périphérique (61) et la largeur de ladite zone périphérique (62) sont différentes.

6. Procédé de fabrication selon l'une quelconque des revendications 1 à 5, dans lequel ledit enlèvement par fusion et vaporisation intervient simultanément sur lesdites faces principales (111), (121) et (112), (122).

7. Procédé de fabrication selon l'une quelconque des revendications 1 à 6, dans lequel lesdites zones périphériques (61, 62) de chacune desdites au moins une première (11) et seconde tôles d'acier (12), sont dépourvues de leur couche respective d'alliage métallique (19, 20) en laissant en place leur couche respective d'alliage intermétallique (17, 18).

8. Procédé de fabrication selon l'une quelconque des revendications 1 à 7, dans lequel lesdits substrats (25, 26) ont des compositions d'acier différentes.

9. Procédé de fabrication selon l'une quelconque des revendications 1 à 8, dans lequel lesdits pré-revêtements (15,16) ont des épaisseurs différentes.

10. Procédé de fabrication selon l'une quelconque des revendications 1 à 9, dans lequel ladite couche d'alliage métallique (19,20) dudit pré-revêtement (15, 16) comprend, les teneurs étant exprimées en poids, entre 8 et 11% de silicium, entre 2 et 4 % en fer, le reste de la composition étant de l'aluminium et des impuretés inévitables.

11. Procédé de fabrication selon l'une quelconque des revendications 1 à 10, dans lequel ledit jeu (31) est supérieur à 0,04 mm.

12. Procédé de fabrication selon l'une quelconque des revendications 1 à 10, dans lequel ledit jeu (31) est supérieur à 0,06 mm.

13. Procédé de fabrication selon l'une quelconque des revendications précédentes, dans lequel ladite opération de soudage est réalisée par au moins un faisceau Laser (95).

14. Procédé de fabrication selon l'une quelconque des revendications précédentes, dans lequel ladite opération de soudage est réalisée simultanément par deux faisceaux Laser, l'un effectuant un soudage du côté desdites faces principales (111) et (121), l'autre effectuant un soudage du côté desdites faces principales opposées (112) et (122).

15. Procédé de fabrication selon l'une quelconque des revendications précédentes, dans lequel ledit enlèvement par fusion et vaporisation est réalisé grâce à un faisceau Laser (80), et que les dispositifs permettant de réaliser ledit enlèvement et ladite opération de soudage, sont combinés au sein d'un équipement dont la vitesse relative de déplacement par rapport à ladite au moins une première tôle (11) et ladite au moins une seconde tôle (12), est identique.

16. Procédé de fabrication selon l'une quelconque des revendications précédentes, dans lequel ladite opération de soudage est réalisée en utilisant simultanément au moins un faisceau Laser (95) et un fil d'apport (82).

17. Procédé de fabrication selon l'une quelconque des revendications précédentes, dans lequel ladite étape d'enlèvement est guidée à l'aide d'un dispositif de suivi dudit plan médian (51), que les coordonnées (x-y) définissant la localisation dudit plan (51) à un instant t, sont enregistrées par un moyen informatique, et sont utilisées pour guider ladite opération de soudage intervenant ultérieurement.

18. Procédé de fabrication selon l'une quelconque des revendications précédentes, dans lequel ladite étape d'enlèvement est guidée à l'aide d'un premier dispositif de suivi dudit plan médian (51), et que le guidage dudit soudage est réalisé au moyen d'un second dispositif de suivi dudit plan médian, distinct dudit premier dispositif.

19. Procédé de fabrication selon l'une quelconque des revendications précédentes, dans lequel lesdites tôles (11) et (12) sont bridées par un dispositif de bridage (98) durant ladite opération d'enlèvement par fusion et vaporisation, ledit bridage étant maintenu constamment jusqu'à ladite opération de soudage et au moins pendant ladite opération de soudage, par ledit dispositif (98).

20. Procédé de fabrication d'une pièce durcie sous presse à partir d'un flan soudé, comprenant les étapes successives selon lesquelles :
- on approvisionne au moins un flan soudé fabriqué selon l'une quelconque des revendications précédentes puis,
- on chauffe ledit au moins un flan soudé de manière à former, par alliation entre ledit substrat d'acier (25, 26) et ledit pré-revêtement (15, 16) un composé allié intermétallique, et de manière à conférer une structure partiellement ou totalement austénitique audit substrat (25, 26), puis
- on met en forme à chaud ledit au moins un flan soudé pour obtenir une pièce, puis
- on refroidit ladite pièce avec une vitesse suffisante pour former au moins partiellement de la martensite ou de la bainite dans ledit substrat (25, 26), obtenant ainsi un durcissement sous presse.

21. Procédé de fabrication selon la revendication 20, **caractérisé en ce que** ladite mise en forme à chaud dudit au moins un flan soudé est réalisée par une opération d'emboutissage à chaud.

22. Flan soudé réalisé par l'assemblage d'au moins une première (11) et une seconde (12) tôle d'acier pré-revêtues, constituées d'un substrat en acier (25,26), ledit acier étant un acier de traitement thermique, apte à subir une trempe martensitique ou bainitique après un traitement d'austénitisation, et d'un pré-revêtement (15,16) constitué d'une couche d'alliage intermétallique (17,18) en contact avec ledit substrat en acier, surmontée d'une couche métallique d'aluminium, ou d'alliage d'aluminium ou à base d'aluminium (19,20), ladite au moins une première tôle (11) comprenant une face principale (111), une face principale opposée (112), ladite au moins une seconde tôle (12) comprenant une face principale (121) et une face principale opposée (122), ladite couche d'alliage métallique (19) étant ôtée par fusion et vaporisation dans une zone périphérique (61) de ladite au moins une tôle (11), et ladite couche d'alliage métallique (20) dans une zone périphérique (62) de ladite au moins une tôle (12), ledit flan soudé comportant au moins un joint soudé (52) définissant un plan médian (51) perpendiculaire aux faces principales desdites au moins une première (11) et seconde tôle (12), et des sections transversales (52 a), (52b),... (52n) perpendiculaires audit plan médian (51), caractérisée en que les caractéristiques morphologiques des couches (17,18) résultant de la solidification après les fusion et vaporisation du pré-revêtement, dans les zones périphériques (61, 62), sont identiques dans les sections (52 a, 52b,... 52n) de part et d'autre du plan médian (51), et en ce que la somme de la largeur desdites zones périphériques (61) et (62) varie de moins de 10% le long dudit joint soudé.

23. Flan soudé selon la revendication 22, **caractérisé en ce que** ladite couche d'alliage métallique (19,20) dudit pré-revêtement (15,16) comprend, les teneurs étant exprimées en poids, entre 8 et 11% de silicium, entre 2 et 4 % en fer, le reste de la composition étant de l'aluminium et des impuretés inévitables.

24. Utilisation d'une pièce d'acier fabriquée selon la revendication 20 ou 21 pour la fabrication de pièces de structures, anti-intrusion ou d'absorption de chocs, dans des véhicules notamment automobiles.

## Patentansprüche

1. Herstellungsverfahren einer geschweißten Platine, wobei:
mindestens ein erstes (11) und ein zweites (12) Blech bereitgestellt werden, welche durch ein Vorbereitungsverfahren vorbereitet werden, umfassend die aufeinanderfolgenden Schritte, denen zufolge:
- mindestens ein erstes (11) und ein zweites (12) vorbeschichtetes Stahlblech bereitgestellt werden, bestehend aus einem Wärmebehandlungs-Stahlsubstrat (25, 26), welches dazu geeignet ist, einem Martensit- oder Bainit-Härten nach einer Austenitisierungsbehandlung unterzogen zu werden, und einer Vorbeschichtung (15, 16), bestehend aus einer intermetallischen Legierungsschicht (17, 18) in Kontakt mit dem Stahlsubstrat mit einer Metallschicht aus Aluminium oder Aluminiumlegierung oder auf der Basis von Aluminium (19, 20) darüber, wobei das mindestens eine erste Blech (11) eine Hauptfläche (111), eine gegenüberliegende Hauptfläche (112) und mindestens eine sekundäre Fläche (71) umfasst, wobei das mindestens eine zweite Blech (12) eine Hauptfläche (121), eine gegenüberliegende Hauptfläche (122) und mindestens eine sekundäre Fläche (72) umfasst,
**dadurch gekennzeichnet dass**,
- das mindestens eine erste (11) und zweite (12) Blech unter Beibehaltung eines Spiels (31) von zwischen 0,04 und 2 mm zwischen den mindestens einen gegenüber platzierten sekundären Flächen (71) und (72) nebeneinander gelegt werden, wobei das Nebeneinanderlegen des mindestens einen ersten (11) und zweiten Blechs (12) eine Mittelebene (51) definiert, welche sich senkrecht zu den Hauptflächen des mindestens einen ersten (11) und zweiten Blechs (12) erstreckt, dann
- die Metalllegierungsschicht (19) in einer peripheren Zone (61) des mindestens einen Blechs (11) und die Metalllegierungsschicht (20) in einer peripheren Zone (62) des mindestens einen Blechs (12) durch Schmelzen und Verdampfen gleichzeitig auf mindestens der Hauptfläche (111) und der Hauptfläche (121) entfernt werden, wobei die peripheren Zonen (61) und (62) die Zonen der Hauptflächen (111) und (121) sind, die auf beiden Seiten der Mittelebene (51) am nächsten zur Mittelebene (51) gelegen sind,
und wobei ein Schweißvorgang des mindestens einen ersten Blechs (11) und mindestens einen zweiten Blechs (12) in der Zone der Entfernung durch Schmelzen und Verdampfen entlang einer durch die Mittelebene (51) definierten Ebene weniger als eine Minute nach dem Vorgang des Entfernens durch Schmelzen und Verdampfen auf dem mindestens einen ersten Blech (11) und dem mindestens einen zweiten Blech (12) erfolgt.

2. Herstellungsverfahren nach Anspruch 1, **dadurch gekennzeichnet, dass** das gleichzeitige Entfernen durch Schmelzen und Verdampfen mit einem Laserstrahl erfolgt, der die Mittelebene (51) überlappt.

3. Herstellungsverfahren nach einem der Ansprüche 1 oder 2, **dadurch gekennzeichnet, dass** die Breite der peripheren Zone (61) und die Breite der peripheren Zone (62) zwischen 0,25 und 2,5 mm liegen.

4. Herstellungsverfahren nach einem der Ansprüche 1 bis 3, **dadurch gekennzeichnet, dass** die Breite der peripheren Zone (61) und die Breite der peripheren Zone (62) gleich sind.

5. Herstellungsverfahren nach einem der Ansprüche 1 bis 3, **dadurch gekennzeichnet, dass** die Breite der peripheren Zone (61) und die Breite der peripheren Zone (62) unterschiedlich sind.

6. Herstellungsverfahren nach einem der Ansprüche 1 bis 5, **dadurch gekennzeichnet, dass** das Entfernen durch Schmelzen und Verdampfen gleichzeitig auf den Hauptflächen (111), (121) und (112), (122) erfolgt.

7. Herstellungsverfahren nach einem der Ansprüche 1 bis 6, **dadurch gekennzeichnet, dass** die peripheren Zonen (61, 62) von jedem von dem mindestens einen ersten (11) und zweiten Stahlblech (12) unter Beibehaltung ihrer jeweiligen intermetallischen Legierungsschicht (17, 18) von ihrer jeweiligen Metalllegierungsschicht (19, 20) befreit sind.

8. Herstellungsverfahren nach einem der Ansprüche 1 bis 7, wobei die Substrate (25, 26) unterschiedliche Stahlzusammensetzungen haben.

9. Herstellungsverfahren nach einem der Ansprüche 1 bis 8, wobei die Vorbeschichtungen (15,16) unterschiedliche Dicken haben.

10. Herstellungsverfahren nach einem der Ansprüche 1 bis 9, wobei die Metalllegierungsschicht (19, 20) der Vorbeschichtung (15, 16) zwischen 8 und 11 % Silizium, zwischen 2 und 4 % Eisen umfasst, wobei der Rest der Zusammensetzung Aluminium und unvermeidbare und die Gehalte relativ zum Gewicht ausgedrückt sind.

11. Herstellungsverfahren nach einem der Ansprüche 1 bis 10, wobei das Spiel (31) größer als 0,04 mm ist.

12. Herstellungsverfahren nach einem der Ansprüche 1 bis 10, wobei das Spiel (31) größer als 0,06 mm ist.

13. Herstellungsverfahren nach einen der vorangegangenen Ansprüche, wobei der Schweißvorgang von mindestens einem Laserstrahl (95) durchgeführt wird.

14. Herstellungsverfahren nach einem der vorangegangenen Ansprüche, wobei der Schweißvorgang gleichzeitig von zwei Laserstrahlen durchgeführt wird, wobei einer ein Schweißen auf der Seite der Hauptflächen (111) und (121) durchführt und der andere ein Schweißen auf der Seite der gegenüberliegenden Hauptflächen (112) und (122) durchführt.

15. Herstellungsverfahren nach einem der vorangegangenen Ansprüche, wobei das Entfernen durch Schmelzen und Verdampfen mit einem Laserstrahl (80) durchgeführt wird, und dass die Vorrichtungen, die die Durchführung des Entfernens und den Schweißvorgang erlauben, innerhalb einer Ausrüstung kombiniert sind, deren relative Bewegungsgeschwindigkeit relativ zu dem mindestens einen ersten Blech (11) und dem mindestens einen zweiten Blech (12) identisch ist.

16. Herstellungsverfahren nach einem der vorangegangenen Ansprüche, wobei der Schweißvorgang bei gleichzeitiger Verwendung mindestens eines Laserstrahls (95) und eines Zusatzdrahts (82) durchgeführt wird.

17. Herstellungsverfahren nach einem der vorangegangenen Ansprüche, wobei der Schritt des Entfernens mit Hilfe einer Verfolgungsvorrichtung der Mittelebene (51) geführt wird, dass die Koordinaten (x-y), welche die Lokalisierung der Ebene (51) zu einem Zeitpunkt t definieren, von einem Datenverarbeitungsmittel gespeichert werden und verwendet werden, um den später erfolgenden Schweißvorgang zu führen.

18. Herstellungsverfahren nach einem der vorangegangenen Ansprüche, wobei der Schritt des Entfernens mit Hilfe einer ersten Verfolgungsvorrichtung der Mittelebene (51) geführt wird und dass die Führung des Schweißens mit Hilfe einer zweiten Verfolgungsvorrichtung der Mittelebene durchgeführt wird, welche sich von der ersten Vorrichtung unterscheidet.

19. Herstellungsverfahren nach einem der vorangegangenen Ansprüche, wobei die Bleche (11) und (12) während des Vorgangs des Entfernens durch Schmelzen und Verdampfen in einer Spannvorrichtung (98) eingespannt sind, wobei die Einspannung durch die Vorrichtung (98) bis zum Schweißvorgang und mindestens während des Schweißvorgangs ununterbrochen aufrechterhalten wird.

20. Herstellungsverfahren eines pressgehärteten Teils aus einer geschweißten Platine, umfassend die aufeinanderfolgenden Schritte, gemäß denen:
- mindestens eine geschweißte Platine, hergestellt gemäß einem der vorangegangenen Ansprüche, bereitgestellt wird, dann
- die mindestens eine geschweißte Platine derart erwärmt wird, dass eine legierte intermetallische Verbindung durch Legieren zwischen dem Wärmebehandlungs-Stahlsubstrat (25, 26) und der Vorbeschichtung (15, 16) gebildet wird und dem Substrat (25, 26) eine teilweise oder vollständige austenitische Struktur verliehen wird, dann
- die mindestens eine geschweißte Platine warm umgeformt wird, um ein Teil zu erhalten, dann
- das Teil mit einer Geschwindigkeit abgekühlt wird, die ausreichend ist, um mindestens teilweise Martensit oder Bainit im Substrat (25, 26) zu bilden, wodurch ein Presshärten erzielt wird.

21. Herstellungsverfahren nach Anspruch 20, **dadurch gekennzeichnet, dass** das Warmumformen der mindestens einen geschweißten Platine durch Warmziehen erfolgt.

22. Geschweißte Platine, hergestellt durch Verbinden von mindestens einem ersten (11) und einem zweiten (12) vorbeschichteten Stahlblech, bestehend aus einem Wärmebehandlungs-Stahlsubstrat (25, 26), welches dazu geeignet ist, einem Martensit- oder Bainit-Härten nach einer Austenitisierungsbehandlung unterzogen zu werden, und einer Vorbeschichtung (15,16), bestehend aus einer intermetallischen Legierungsschicht (17, 18) in Kontakt mit dem Stahlsubstrat mit einer Metallschicht aus Aluminium oder aus Aluminiumlegierung oder auf der Basis von Aluminium (19, 20) darüber, wobei das mindestens eine erste Blech (11) eine Hauptfläche (111) und eine gegenüberliegende Hauptfläche (112) umfasst, das mindestens eine zweite Blech (12) eine Hauptfläche (121) und eine gegenüberliegende Hauptfläche (122) umfasst, wobei die Metalllegierungsschicht (19) durch Schmelzen und Verdampfen in einer peripheren Zone (61) des mindestens einen Blechs (11) und die Metalllegierungsschicht (20) in einer peripheren Zone (62) des mindestens einen Blechs (12) entfernt wird, wobei die geschweißte Platine mindestens eine Schweißnaht (52) aufweist, welche eine Mittelebene (51) definiert, welche sich senkrecht zu den Hauptflächen des mindestens einen ersten (11) und zweiten Blechs (12) erstreckt, sowie Querschnitte (52a), (52b),... (52n) welche sich quer zur Mittelebene (51) erstrecken, **dadurch gekennzeichnet, dass** die morphologischen Merkmale der Schichten (17, 18) , die infolge der Verfestigung nach dem Schmelzen und Verdampfen der Vorbeschichtung in den peripheren Zonen (61, 62) entstehen, in den Querschnitte (52a, 52b,...,52n) beiderseits der Mittelebene (51) identisch sind und dass die Summe der Breite der peripheren Zonen (61) und (62) entlang der Schweißnaht um weniger als 10 % variiert.

23. Geschweißte Platine nach Anspruch 22, **dadurch gekennzeichnet, dass** die Metalllegierungsschicht (19,20) der Vorbeschichtung (15,16), zwischen 8 und 11 % Silizium und zwischen 2 und 4 % Eisen umfasst, wobei der Rest der Zusammensetzung Aluminium und unvermeidbare Verunreinigungen sind und die Gehalte relativ zum Gewicht ausgedrückt sind.

24. Verwendung eines Stahlteils, hergestellt nach Anspruch 20 oder 21, für die Herstellung von Struktur-, Antiintrusions- oder Stoßabsorptionsteilen in Fahrzeugen, und vor allem Kraftfahrzeugen.

## Claims

1. Method for producing a welded blank, wherein :
there are supplied at least one first (11) and one second (12) sheets prepared by a preparation method comprising the successive steps according to which:
- there are supplied at least one first (11) and one second (12) pre-coated steel sheets, formed from a steel substrate (25, 26), said steel being a thermal treatment steel, which is able to undergo a martensitic or bainitic hardening after an austenitisation treatment, and from a pre-coating (15, 16) formed from a layer of intermetallic alloy (17, 18) in contact with said steel substrate, surmounted by a metallic layer of aluminium or aluminium alloy or based on aluminium (19, 20), said at least one first metal sheet (11) comprising a main face (111), an opposite main face (112), and at least one secondary face (71), said at least one second metal sheet (12) comprising a main face (121), an opposite main face (122), and at least one secondary face (72), **characterised in that** the method comprises the following steps:
- there are positioned said at least one first (11) and second (12) metal sheets, leaving a clearance (31) between 0.02 and 2 mm between said at least one secondary face (71) and (72) which are placed one opposite the other, the positioning of said at least one first (11) and second (12) metal sheets defining a median plane (51) which is perpendicular to the main faces of said at least one first (11) and second metal sheet (12), then
- there are removed by melting and vaporisation, simultaneously on at least said main face (111) and said main face (121), said layer of metallic alloy (19) in a peripheral zone (61) of said at least one metal sheet (11), and said layer of metallic alloy (20) in a peripheral zone (62) of said at least one metal sheet (12), said peripheral zones (61) and (62) being the zones of the main faces (111) and (121) which are nearest relative to said median plane (51) situated on both sides relative to the latter,
and wherein an operation of welding said at least one first metal sheet (11) and at least one second metal sheet (12) is implemented in the zone of said removal by melting and vaporisation, tracking a plane defined by said median plane (51), less than one minute after said operation for removal by melting and vaporisation on said at least one first metal sheet (11) and at least one second metal sheet (12).

2. Production method according to claim 1, wherein said simultaneous removal by melting and vaporisation is implemented by a laser beam straddling said median plane (51).

3. Production method according to any of the claims 1 or 2, wherein the width of said peripheral zone (61) and the width of said peripheral zone (62) are between 0.25 and 2.5 mm.

4. Production method according to any of the claims 1 to 3, wherein the width of said peripheral zone (61) and the width of said peripheral zone (62) are equal.

5. Production method according to any of the claims 1 to 3, wherein the width of said peripheral zone (61) and the width of said peripheral zone (62) are different.

6. Production method according to any of the claims 1 to 5, wherein said removal by melting and vaporisation is implemented simultaneously on said main faces (111), (121) and (112), (122).

7. Production method according to any of the claims 1 to 6, wherein said peripheral zones (61, 62) of each of said at least one first (11) and second steel sheets (12) are devoid of their respective layer of metallic alloy (19, 20) while leaving in place their respective layer of intermetallic alloy (17, 18).

8. Production method according to any of the claims 1 to 7, wherein said substrates (25, 26) have different steel compositions.

9. Production method according to any of the claims 1 to 8, wherein said pre-coatings (15, 16) have different thicknesses.

10. Production method according to any of the claims 1 to 9, wherein said layer of metallic alloy (19, 20) of said pre-coating (15, 16) comprises, the contents being expressed by weight, between 8 and 11% of silicon, between 2 and 4% of iron, the remainder of the composition being aluminium and unavoidable impurities.

11. Production method according to any of the claims 1 to 10, wherein said clearance (31) is greater than 0.04 mm.

12. Production method according to any of the claims 1 to 10, wherein said clearance (31) is greater than 0.06 mm.

13. Production method according to any one of the previous claims, wherein said welding operation is implemented by at least one laser beam (95).

14. Production method according to any of the previous claims, wherein said welding operation is implemented simultaneously by two laser beams, one effecting welding of the side of said main faces (111) and (121), the other effecting welding of the side of said opposite main faces (112) and (122).

15. Production method according to any of the previous claims, wherein said removal by melting and vaporisation is implemented by means of a laser beam (80), and in that the devices which make it possible to implement said removal and said welding operation are combined within one piece of equipment, the relative speed of displacement of which relative to said at least one first metal sheet (11) and said at least one second metal sheet (12) is identical.

16. Production method according to any of the previous claims, wherein said welding operation is implemented using simultaneously at least one laser beam (95) and one welding wire (82).

17. Production method according to any of the previous claims, wherein said removal step is guided by means of a device for tracking said median plane (51), in that the coordinates (x-y) defining the location of said plane (51) at an instant t are recorded by a computing means, and are used in order to guide said welding operation which takes place subsequently.

18. Production method according to any of the previous claims, wherein said removal step is guided by means of a first device for tracking said median plane (51), and in that the guidance of said welding is implemented by means of a second device for tracking said median plane, which is separate from said first device.

19. Production method according to any of the previous claims, wherein metal sheets (11) and (12) are clamped by a clamping device (98) during said operation of removal by melting and vaporisation, said clamping being maintained constantly up to said welding operation and at least during said welding operation, by said device (98).

20. Method for producing a hardened part with a press from a welded blank, comprising the successive steps according to which:
- there is supplied at least one welded blank produced according to any of the preceding claims, then
- said at least one welded blank is heated in order to form, by alloying between said steel substrate (25, 26) and said pre-coating (15, 16), an intermetallic alloyed compound, and in order to confer a partially or totally austenitic structure to said substrate (25, 26), then
- said at least one welded blank is hot-shaped in order to obtain a part, then
- said part is cooled with sufficient speed to form at least partially the martensite or the bainite in said substrate (25, 26), thus obtaining hardening with a press.

21. Production method according to claim 20, **characterised in that** said hot-shaping of said at least one welded blank is implemented by a hot-drawing operation.

22. Welded blank produced by assembly of at least one first (11) and one second (12) pre-coated steel sheet, formed from a substrate of thermally treated steel (25, 26) which are able to undergo a martensitic or bainitic hardening after an austenitisation treatment,
and from a pre-coating (15, 16) formed from a layer of intermetallic alloy (17, 18) in contact with said steel substrate, surmounted by a metallic layer of aluminium or aluminium alloy or based on aluminium (19, 20), said at least one first metal sheet (11) comprising a main face (111), an opposite main face (112), said at least one second metal sheet (12) comprising a main face (121) and an opposite main face (122), said layer of metallic alloy (19) being removed by melting and vaporisation in a peripheral zone (61) of said at least one metal sheet (11), and said layer of metallic alloy (20) in a peripheral zone (62) of said at least one metal sheet (12), said welded blank comprising at least one welded joint (52) defining a median plane (51) which is perpendicular to the main faces of said at least one first (11) and second metal sheet (12), and transverse sections (52a), (52b), ... (52n), perpendicular to said median plane (51), **characterised in that** the morphological characteristics of the layers (17, 18) resulting from solidification after melting and vaporization of the pre-coating in the peripheral zones (61,62) are identical in the sections (52 a , 52 b , . . . 52 n) on either side of the median plane (51), and the sum of the width of said peripheral zones (61) and (62) varies by less than 10% along said welded joint.

23. Welded blank according to claim 22, **characterised in that** said layer of metallic alloy (19, 20) of said pre-coating (15, 16) comprises, the contents being expressed by weight, between 8 and 11% of silicon, between 2 and 4% of iron, the remainder of the composition being aluminium and unavoidable impurities.

24. Use of a steel part produced according to claim 20 or 21 for producing structural parts, anti-intrusion parts or parts for absorption of impact, in particular in automotive vehicles.
